# EUROPÄISCHE PATENTSCHRIFT

(11) **EP 2 060 337 B1**
(45) Veröffentlichungstag und Bekanntmachung des Hinweises auf die Patenterteilung: **19.05.2010**
(21) Anmeldenummer: 08018029.2
(22) Anmeldetag: 15.10.2008
(51) Int. Cl.: B21D 39/02

(54) **Vorrichtung zum randseitigen Verbinden von Blechen**
Device for connecting metal sheets to edges
Dispositif destiné à la liaison sur le bord de tôles

(30) Priorität: 15.11.2007 DE 102007054559
(43) Veröffentlichungstag der Anmeldung: 20.05.2009
(73) Patentinhaber: ThyssenKrupp Drauz Nothelfer GmbH, 74076 Heilbronn (DE)
(72) Erfinder: Backes, Marco, 66620 Nonnweiler (DE)
(74) Vertreter: Dahlkamp, Heinrich-Leo

(56) Entgegenhaltungen:
- EP-A- 1 240 970
- EP-A- 1 785 340
- DE-A1- 19 927 208
- JP-A- 7 227 677
- US-A- 5 752 304

## Beschreibung

Die Erfindung betrifft eine Vorrichtung zum randseitigen Verbinden von Blechen, insbesondere Karosserieblechen im Automobilbau in einer vorzugsweise von oben beladbaren Falzmaschine gemäß Oberbegriff des ersten Patentanspruchs (siehe z.B. JP-A-07 227 677).

Der DE 199 27 208 ist ein Verfahren zum randseitigen Verbinden von Blechen, insbesondere von Karosserieblechen im Automobilbau, zu entnehmen, wobei der Rand eines Außenbleches über den Rand eines Innenbleches gefalzt wird und die Ränder zusammengepresst werden. Vor dem Falzen wird der Rand wenigstens eines der Bleche mit eingeprägten Vorsprüngen versehen, wobei die Vorsprünge während des Zusammenpressens durch Buckelschweißen mit dem jeweils anderen Blech verbunden werden. Zum Einsatz gelangt hierbei eine auf die Vorsprünge absenkbare Elektrode, wobei neben der Elektrode eine auf die Bleche absenkbare Kontaktelektrode vorgesehen ist. Diese an sich kompakte Bauform bringt den Nachteil mit sich, dass die Handhabung der Bleche innerhalb der Vorrichtung erschwert wird.

Der Erfindung liegt die Aufgabe zugrunde, eine alternative konstruktive Bauform einer Falz- und Fügemaschine bereitzustellen, die bei optimaler Handhabung der Bleche innerhalb der Vorrichtung dennoch eine vereinfachte Verbindung derselben im Bereich des Falzes erlaubt.

Die Lösung dieser Aufgabe ist im Patentanspruch 1 angegeben. Die Unteransprüche 2-11 enthalten vorteilhalfe Ausführungsformen dazu.

Die Aufgabe wird insbesondere dadurch gelöst, dass das Fügewerkzeug und/oder sein Aufnahmeelement am blechseitigen Hebelende eines am Falzbackenträger befestigten Hebels angeordnet ist und relativ zum Hebelende in zumindest einer definierten Schwenkrichtung um den Fügepunkt der zu verbindenden Bleche schwenkbar ist.

Mit dem Erfindungsgegenstand wird eine zumindest in eine, vorteilhafterweise jedoch in zwei Richtungen schwenkbare Elektrode, insbesondere Punktschweißelektrode, respektive Masseelektrode, zum Ausgleich von Bauteilkrümmungen, Fertigungstoleranzen und Bauteiltoleranzen bereitgestellt, die gegenüber dem Stand der Technik wesentlich größere Freiheitsgrade mit sich bringt.

Wesentlich ist dabei, dass bei dem Schwenken der jeweiligen Elektrode die Position des jeweiligen Fügepunktes nicht verändert wird.

Durch die Kombination mit der zweiten Schwenkachse und der Möglichkeit, den jeweiligen Hebel (Massehebel/Schweißhebel) innerhalb einer Führung linear zu verschieben, ist eine individuelle Anpassung der Elektrode(n) an die zu verbindenden Bauteile möglich.

Durch die Form und Anordnung der Elektroden ist es bei angepasster Flanschgeometrie möglich, die jeweilige Masseelektrode nah am Flansch zu platzieren. Durch diese Maßnahme wird die Qualität der Verbindung verbessert, da nicht "hohl gedrückt" wird.

Die zu falzenden Bleche lassen sich problemlos innerhalb der Vorrichtung handhaben und falzen sowie zumindest bis zur Aushärtung des Klebers durch Punktschweißung miteinander verbinden, da keine störenden Fügeelemente vorhanden sind.

Darüber hinaus ist eine direkte Integration der thermischen Fügeeinheit in eine vorzugsweise von oben beladbare Falzvorrichtung gegeben.

Es besteht auch die Möglichkeit, die Führungen für den jeweiligen Hebel um eine definierte, außerhalb des Falzbettes vorgesehene Achse schwenkbar vorzusehen, wobei die Schweißkrafteinleitung über ein mechanisches Hebelprinzip erfolgt und am von der Schweißstelle abgewandten Ende eine Feder oder eine ähnliche Einrichtung zur Betätigung angeordnet ist.

Das Fügewerkzeug kann ein Laserstrahl, ein Löt- oder ein Schweißwerkzeug, insbesondere eine Punktschweißelektrode, sein. Der Fachmann wird, in Abhängigkeit vom Anwendungsfall, das geeignete Fügewerkzeug auswählen.

Der Erfindungsgegenstand ist anhand eines Ausführungsbeispiels in den Figuren 1 bis 8 dargestellt. Es zeigen:
- Figur 1: Darstellung eines Teilbereiches einer Schweißzange an einer von oben beladbaren Falzmaschine;
- Figur 2: Explosionsdarstellung eines schwenkbaren Fügewerkzeuges;
- Figur 3: Draufsicht auf Figur 1;
- Figur 4: Schnitt durch Figur 1 mit verschwenkbarer Führung;
- Figur 5: Alternative Darstellung zu Figur 1;
- Figur 6: Prinzipskizze der Anordnung von Masse- und Schweißelektroden gemäß Figur 5 in der Seitenansicht;
- Figur 6a: Eine Draufsicht zu Figur 6;
- Figur 7: Eine schematische Darstellung im senkrechten Schnitt durch eine von oben beladbare Falzmaschine;
- Figur 8: Eine Draufsicht auf ein Falzwerkzeug mit vier erfindungsgemäßen Schweißzangen.

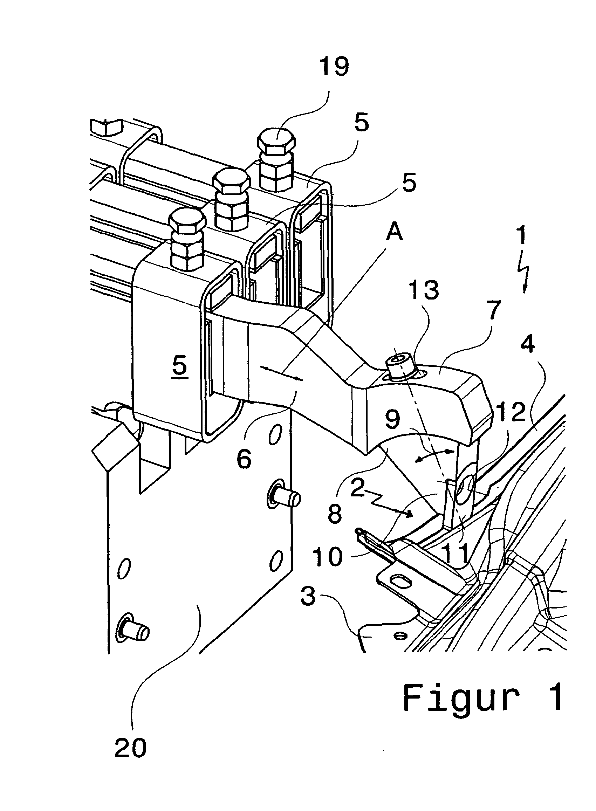

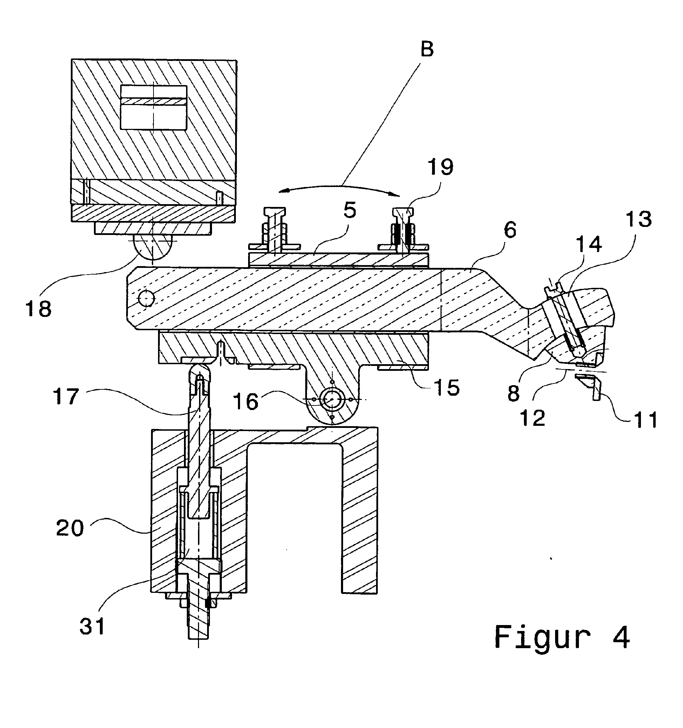

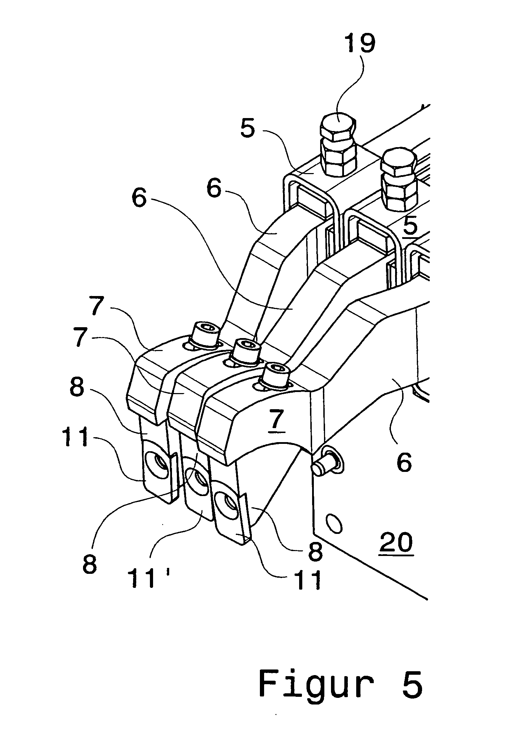

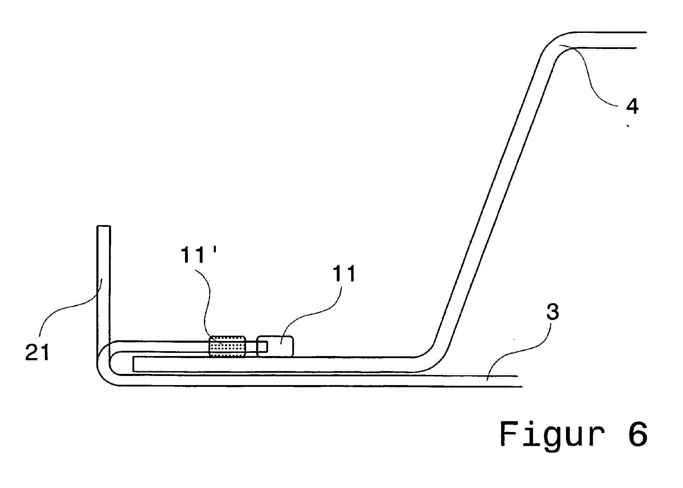

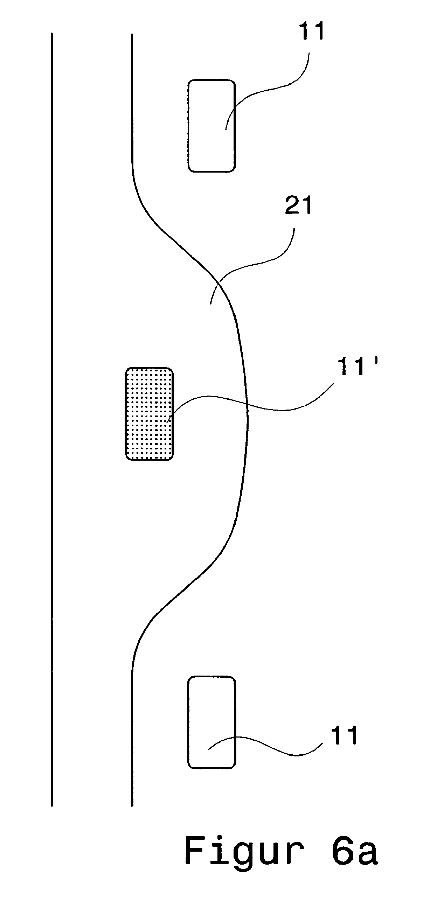

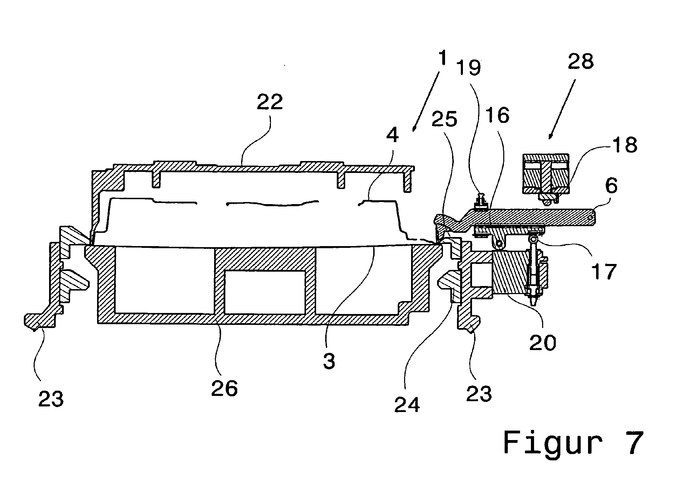

Figur 1 zeigt einen Teilbereich einer nur angedeuteten, von oben beladbaren Falzmaschine 1. Angedeutet ist der Verbindungsbereich 2 zweier miteinander zu verbindender Bleche 3,4 (vgl. Figur 6). Außerhalb der Falzmaschine 1 befinden sich Halterungen 5, die zur Aufnahme von Hebeln 6, dienen. Die Halterungen 5 sind, wie insbesondere auch aus Figur 4 ersichtlich ist, mit einer im Wesentlichen waagerechten Schwenkachse 16 auf einem Grundkörper 20 gelagert, der wiederum an dem Falzbackenträger 23 (vgl. Figur 7) befestigt ist. Zur besseren Übersicht ist in den Figuren 1 - 3 lediglich ein äußerer Hebel 6 dargestellt. Ein innerer und ein weiterer äußerer Hebel 6 wären innerhalb der benachbarten Halterungen 5 positioniert. Die Figur 5 zeigt eine perspektivische Darstellung, bei der mehrere Hebel 6 innerhalb der zugehörigen Halterung 5 positioniert sind. Der jeweilige Hebel 6 ist innerhalb seiner Halterung 5 linear verschiebbar (vgl. Doppelpfeil A) und wird anschließend mit der Befestigungsschraube 19 am Aufnahmeblock 15 fixiert.

An dem im Verbindungsbereich 2 vorgesehenen Hebelende 7 des Hebels 6 befindet sich ein Aufnahmeelement 8, das relativ zum Hebel 6, respektive Hebelende 7, in einem Langloch 13 in einer definierter Drehrichtung 9 in Pfeilrichtung um eine im Fügepunkt bzw. Schweißpunkt auf den Blechen 3, 4 angeordnete Achse schwenkbar ist. Je nach Ausführungsform kann auch eine Elektrode unmittelbar am Hebelende 7 positioniert werden, so dass selbige dann relativ zum Hebelende 7 verschwenkbar ist. Durch diese Maßnahme wird eine Hauptschwenkrichtung in Drehrichtung 9 für das jeweilige Aufnahmeelement 8 und/oder die Elektroden 11, 11' relativ zum Hebelende 7 definiert. Am freien Ende 10 des Aufnahmeelementes 8 befindet sich jeweils eine Elektrode 11, 11', die entweder eine Masseelektrode 10 oder eine Schweißelektrode 11' (vgl. Figur 5) sein kann. Die Masseelektrode 11 kann aus massivem Kupfermaterial oder aus einem flexiblen Gewebe bestehen. Die jeweilige Elektrode ist unter Bildung einer Nebenschwenkrichtung um die Schwenkachse 12 relativ zum Aufnahmeelement 8 schwenkbar, wobei die beiden Schwenkrichtungen im Wesentlichen rechtwinklig zueinander verlaufen.

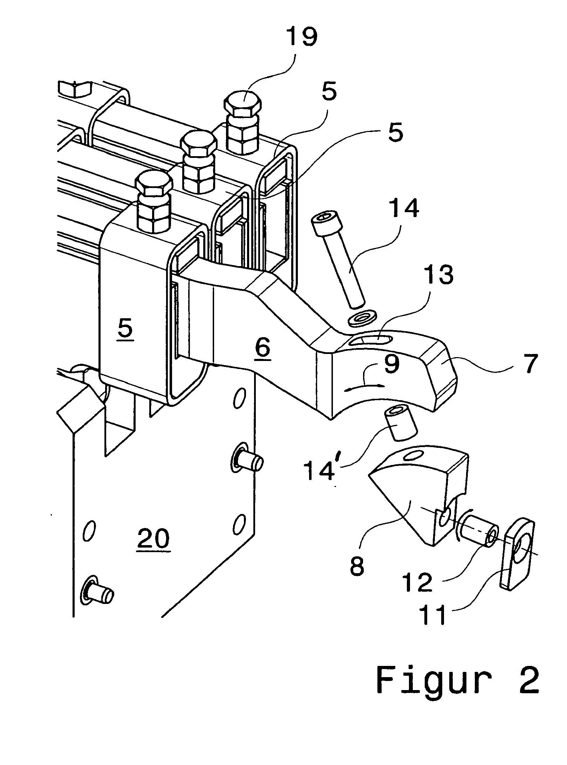

Figur 2 zeigt den Hebel 6 samt Aufnahmeelement 8 und Elektrode 11 als Explosionsdarstellung. Das Hebelende 7 verfügt über ein Langloch 13, innerhalb dessen Führungs- und Verbindungselemente 14, 14' zur schwenkbaren Verbindung des Aufnahmeelementes 8 relativ zum Hebel 6 bzw. zum Hebelende 7 führbar sind.

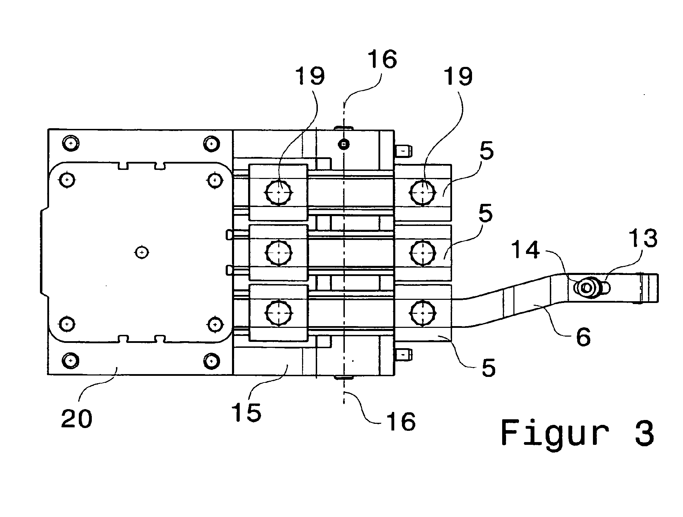

Figur 3 ist eine Draufsicht auf Figur 1. Erkennbar sind die Halterungen 5 mit den Schrauben 19 zur Befestigung der Hebel 6. In dieser Figur sind auch das Langloch 13, sowie das Verbindungselement 14 erkennbar. Die Halterungen 5 sind im Bereich jeweils eines Aufnahmeblockes 15, parallel zueinander angeordnet. Der Aufnahmeblock 15 ist mit der Schwenkachse 16 auf dem Grundkörper 20 schwenkbar gelagert (vgl. auch Figuren 5 und 7), wobei auch jeder einzelne Hebel 6 einen für sich schwenkbaren Aufnahmeblock 15 besitzen kann.

Figur 4 zeigt einen Schnitt durch Figur 1, wobei der Hebel 6, die Halterung 5, das Aufnahmeelement 8, die Masseelektrode 10 und das Verbindungselement 14, das innerhalb des Langloches 13 geführt ist, erkennbar sind. Angedeutet ist auch die Drehachse 12 des Aufnahmeelementes 8. Die Halterung 5 ist gemeinsam mit dem Aufnahmeblock 15 um die Achse 16 schwenkbar (vgl. Doppelpfeil B) und wird über Betätigungselemente 17, 18 von einer ersten Position in eine zweite Position bzw. umgekehrt geschwenkt. Die Krafteinleitung erfolgt über ein mechanisches Hebelprinzip. Durch die Kombination der zwei Schwenkbewegungen für die Aufnahmeelemente 8 und/oder die Elektroden 11, 11' und die Möglichkeit, den jeweiligen Hebel 6 um die Schwenkachse 16 zu schwenken sowie innerhalb der Halterung 5 linear zu verschieben, ist eine individuelle Anpassung an die miteinander zu verbindenden Bleche 3, 4 möglich. Zur Anpressung der Elektroden 11, 11' auf die Bleche 3, 4 wird das Betätigungselement 17 durch eine Feder 31 unterstützt, wenn das Betätigungselement 18 freigegeben ist. Es können auch ein oder mehrere Halterungen 5 miteinander verbunden sein, so dass sie um eine gemeinsame Schwenkachse 16 mit jeweils einem Betätigungselement 17, 18 in Richtung des hier nicht dargestellten Falzbettes verschwenkt werden können.

Figur 5 zeigt in perspektivischer Darstellung eine erfindungsgemäße Schweißzange 28. Erkennbar sind drei parallel nebeneinander angeordnete Hebel 6 mit Halterungen 5, Aufnahmeelementen 8, sowie Elektroden 11,11'. Die Hebel 6 sind im Wesentlichen baugleich ausgeführt. Gleiches gilt für die Aufnahmeelemente 8, die schwenkbar im Bereich des jeweiligen Hebelendes 7 gelagert sind. In diesem Beispiel soll die mittlere Elektrode die Schweißelektrode 11' sein, während die äußeren Elektroden die Masseelektroden 11 bilden. Es kann aber auch umgekehrt jeweils zwischen zwei Schweißelektroden 11' eine Masseelektrode 11 angeordnet sein. Außerdem kann auch jeweils ein oder mehr Schweißelektroden 11' die gleiche Anzahl an Masseelektroden 11 zugeordnet sein.

Figuren 6 und 6a zeigen als Prinzipskizze das Kontaktbild gemäß Figur 5. Erkennbar sind die mittlere Schweißelektrode 11' und die äußeren Masseelektroden 11. Die Masseelektroden 11 können nahe am Falzflansch 21 des Bleches 3 gesetzt werden, so dass nicht "hohl gedrückt" wird. Die Schweißelektrode 11' wird zum Punktschweißen gleichzeitig auf den zumindest vorgefalzten Falzflansch 21 des Bleches 3 aufgesetzt, um die Bleche 3 und 4 zu verbinden, wobei mit der Schweißelektrode 11' der Falzflansch 21 endgültig geschlossen wird.

In der Figur 7 ist schematisch im Schnitt das Werkzeug der von oben beladbaren Falzmaschine 1 dargestellt. Diese besteht aus einem vertikal bewegbaren Falzbett 26, auf dem die miteinander zu verbindenden Bleche 3 und 4 zur Auflage kommen. Für den Falzvorgang werden die Bleche 3, 4 von einem absenkbaren Niederhalter 22 ganz in der Nähe des Falzflansches 21 gehalten (vgl. in Figur 7 linke Seite des Niederhalters 22). Auf der rechten Seite von Figur 7 besitzt der Niederhalter 22 eine Aussparung für die erfindungsgemäße Schweißzange 28. Auf beiden Seiten des Falzbettes 26 ist ausschnittsweise der Falzbackenträger 23 zu sehen, an dem übereinander die Falzbacken 24, 25 zum Vorfalzen und Fertigfalzen angeordnet sind. Die Falzbackenträger 23 mit den Falzbacken 24, 25 sind im Wesentlichen waagerecht vom Falzbett 26 weg nach außen bewegbar und werden nacheinander zum Vorfalzen und zum Fertigfalzen nach innen bewegt. Zum Vorfalzen wird das Falzbett 26 mit den darauf angeordneten Blechen 3, 4 von unten gegen die Vorfalzbacken 24 gedrückt. Nach Auseinanderfahren der Falzbackenträger 23 wird das Falzbett 26 in den Bereich unterhalb der Falzbacken 25 angehoben und nach erneutem Zusammenfahren der Falzbackenträger 23 wird zum Fertigfalzen das Falzbett 26 von unten gegen die Fertigfalzbacken 25 gepresst. In dieser Endposition wird der Hebel 6 der Schweißzangen 28 mit Hilfe der Betätigungselemente 17, 18 um die Schwenkachse 16 geschwenkt, um die Elektroden 11, 11' auf den Flanschbereich abzusenken. Dazu sind in den Fertigfalzbacken 25 entsprechende Aussparungen vorhanden, um die Hebelenden 7, mit den Aufnahmeelementen 8 und den Elektroden 11, 11' für den Schweißvorgang absenken zu können.

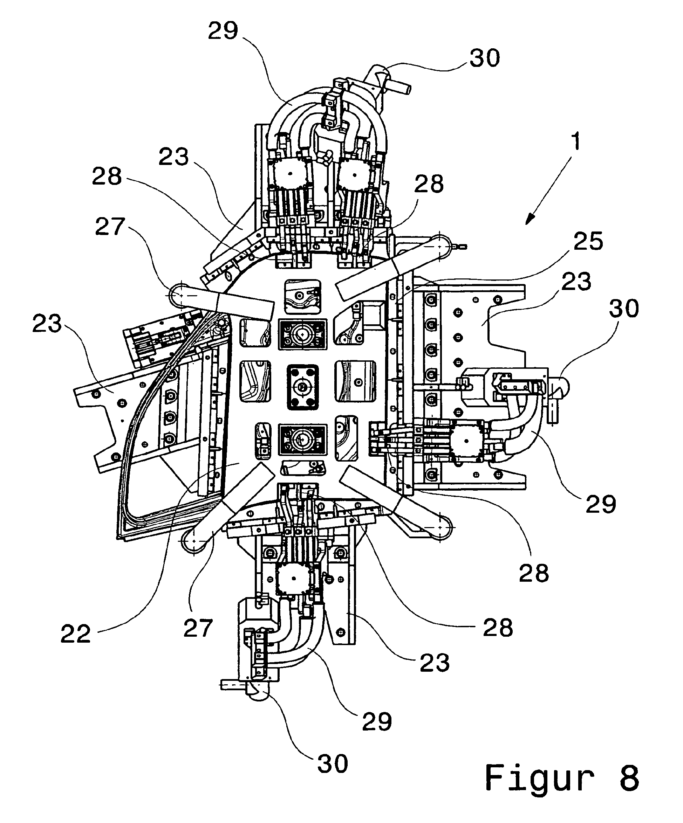

Aus der Figur 8 ist eine Draufsicht auf die Werkzeuge einer von oben beladbaren Falzmaschine ersichtlich, wobei im mittleren Bereich der Niederhalter 22 mit den nach außen gerichteten Armen 27 dargestellt ist. Zum Falzen z.B. einer Kfz.-Tür sind außen zahlreiche Falzbackenträger 23 mit im Bereich des Falzflansches 21 angeordneten Falzbacken 25 zu sehen. Insgesamt sind vier Schweißzangen 28 vorgesehen, um an ausgewählten Stellen den Falzflansch 21 nach dem Falzen durch Punktschweißung so weit zu fixieren, dass das fertige Bauteil aus der Falzmaschine 1 entnommen werden kann. Diese Schweißpunkte müssen zumindest so lange für eine feste Verbindung der beiden Bleche 3, 4 sorgen bis der in den Falzflansch 21 eingebrachte Klebstoff ausgehärtet ist. In der Figur 8 sind zusätzlich die zur Schweißzange 28 gehörigen Schweißkabel 29 und Transformatoren 30 skizziert.

### Bezugszeichenliste

- 1: Falzmaschine
- 2: Verbindungsbereich
- 3: Blech
- 4: Blech
- 5: Halterung (für 6)
- 6: Hebel (für 8,11, 11')
- 7: Hebelende (von 6)
- 8: Aufnahmeelement (für 11, 11')
- 9: Schwenkrichtung (mit Drehachse an der Spitze von 11, 11')
- 10: freies Ende (von 8)
- 11: Masseelektrode
- 11': Schweißelektrode
- 12: Schwenkachse (von 11, 11')
- 13: Langloch (in 6, 7)
- 14, 14': Verbindungselement (von 7, 11 und 11')
- 15: Aufnahmeblock (für 6)
- 16: Schwenkachse (von 6, 15)
- 17: Betätigungselement
- 18: Betätigungselement
- 19: Befestigungsschraube (für 6, an 5, 15)
- 20: Grundkörper (zur Befestigung an 23)
- 21 ,: Falzflansch (von 3)
- 22: Niederhalter
- 23: Falzbackenträger
- 24: Falzbacken (zum Vorfalzen)
- 25: Falzbacken (zum Fertigfalzen)
- 26: Falzbett
- 27: Arme (von 22)
- 28: Schweißzange
- 29: Schweißkabel
- 30: Transformator
- 31: Feder (für 17)

- A: Doppelpfeil (für Bewegung von 6 an 20)
- B: Doppelpfeil (für Bewegung von 6 um 16)

## Patentansprüche

1. Vorrichtung zum randseitigen Verbinden von Blechen (3,4), insbesondere Karosserieblechen im Automobilbau in einer vorzugsweise von oben beladbaren Falzmaschine (1), zumindest beinhaltend ein Falzbett (26) zur Aufnahme mindestens zweier Bleche (3,4), Falzbacken (24,25), die an Falzbackenträgern (23) angeordnet sind, wobei zum Falzen das Falzbett (26) und die Falzbacken (24,25) aufeinander zu bewegbar sind, sowie mindestens ein im Bereich der Falzbacken (25) angeordnetes, auf den Falzflansch (21) absenkbares thermisches Fügewerkzeug wobei das Fügewerkzeug und/oder sein Aufnahmeelement (8) am blechseitigen Hebelende (7) eines am Falzbackenträger (23) befestigten Hebels (6) angeordnet ist, **dadurch gekennzeichnet, dass** das Fügewerkzeug und/oder sein Aufnahmeelement (8) relativ zum Hebel (6) in zumindest einer definierten Schwenkrichtung (9) um den Fügepunkt der zu verbindenden Bleche (3,4) schwenkbar ist.

2. Vorrichtung nach Anspruch 1, **dadurch gekennzeichnet, dass** das Fügewerkzeug relativ zum Aufnahmeelement (8) mit einer Schwenkachse (12) schwenkbar und/oder linear verschiebbar ist.

3. Vorrichtung nach Anspruch 1 oder 2, **dadurch gekennzeichnet, dass** das Fügewerkzeug gegenüber dem Hebel (6) in zwei rechtwinklig zueinander verlaufenden Richtungen schwenkbar ist.

4. Vorrichtung nach Anspruch 1, **dadurch gekennzeichnet, dass** im Bereich des Hebelendes (7) ein Langloch (13) vorgesehen ist, innerhalb dessen Führungs- und Verbindungselemente (14, 14') zur Lagerung des Aufnahmeelementes (8) bewegbar sind.

5. Vorrichtung nach Anspruch 1, **dadurch gekennzeichnet, dass** der Hebel (6) in im Wesentlichen waagerechter Richtung linear am Falzbackenträger (23) verschieblich und/oder um eine Drehachse (16) schwenkbar gelagert ist.

6. Vorrichtung nach Anspruch 1, **dadurch gekennzeichnet, dass** das Fügewerkzeug aus Elektroden (11, 11') zum Schweißen, einem Laserstrahl oder einem sonstigen Schweiß- oder Lötwerkzeug besteht.

7. Vorrichtung nach Anspruch 1, **dadurch gekennzeichnet, dass** als Fügewerkzeug zum Schweißen mindestens eine Schweißelektrode (11') und mindestens eine Masseelektrode (11) an jeweils einem Hebel (6) und/oder einem Aufnahmeelement (8) schwenkbar gelagert ist.

8. Vorrichtung nach Anspruch 7, **dadurch gekennzeichnet, dass** außerhalb des Falzbettes (26) mindestens drei Hebel (6) mit jeweils einer Elektrode (11, 11') nebeneinander an einem Falzbackenträger (23) schwenkbar gelagert sind, wobei zwei Hebel (6) zur Aufnahme von Masseelektroden (11) und dazwischen ein einzelner Hebel (6) zur Aufnahme einer Schweißelektrode oder Punktschweißelektrode (11') oder umgekehrt vorgesehen sind.

9. Vorrichtung nach Anspruch 1, **dadurch gekennzeichnet, dass** Fügewerkzeuge und/oder deren Aufnahmeelemente (8) unabhängig voneinander relativ zum Hebel (6) und/oder zu den Aufnahmeelementen (8) verschwenkbar sind.

10. Vorrichtung nach Anspruch 1 oder 5, **dadurch gekennzeichnet, dass** der Hebel (6) innerhalb einer Halterung (5) linear verschieblich angeordnet ist, wobei die Halterung (5) mit einem Aufnahmeblock (15) am Falzbackenträger (23) um die Drehachse (16) schwenkbar befestigt ist.

11. Vorrichtung nach Anspruch 1, **dadurch gekennzeichnet, dass** ein oder mehrere Hebel (6) gemeinsam oder unabhängig voneinander über Betätigungselemente (17, 18) aus einer ersten in eine zweite Position bzw. umgekehrt schwenkbar ist bzw. sind.

## Claims

1. Device for connecting metal sheets (3, 4) to edges, more particularly of car bodywork sections in automobile manufacture in a folding machine (1) to be loaded preferably from above, at least comprised of a folding bed (26) to take-up at least two metal sheets (3, 4), folding jaws (24, 25) arranged at folding jaw carriers (23), with the folding bed (26) and the folding jaws (24, 25) being movable towards each other for folding, as well as comprised of at least one thermal joining tool arranged in the area of the folding jaws (25) and capable of being lowered onto the folding flange (21), wherein the joining tool and/or its take-up element (8) are arranged at the metal sheet-side lever end (7) of a lever (6) fastened to the folding jaw carrier (23), **characterized in that** the joining tool and/or its take-up element (8) can be swivelled relative to the lever (6) in at least one defined swivelling direction (9) about the joining point of the metal sheets (3, 4) to be connected.

2. Device according to claim 1, **characterized in that** the joining tool can be swivelled and/or slid linearly with a swivelling axis (12) relative to the take-up element (8).

3. Device according to claim 1, **characterized in that** the joining tool can be swivelled versus the lever (6) in two directions extending at right angles to each other.

4. Device according to claim 1, **characterized in that** in the area of the lever end (7) an oblong hole (13) is provided for within which guiding and connecting elements (14, 14') are movable to support the take-up element (8).

5. Device according to claim 1, **characterized in that** the lever (6) mainly in horizontal direction can be slid linearly at the folding jaw carrier (23) and/or swivelled about an axis of rotation (16).

6. Device according to claim 1, **characterized in that** the joining tool is comprised of electrodes (11, 11') for welding, and comprised of a laser beam or any other welding or soldering tool.

7. Device according to claim 1, **characterized in that** serving as joining tool for welding at least one welding electrode (11') and at least one mass electrode (11) are mounted in an arrangement that can be swivelled at one lever (6) and/or at one take-up element (8) each.

8. Device according to claim 7, **characterized in that** outside the folding bed (26) at least three levers (6) with one electrode each (11, 11') are mounted side by side in an arrangement that can be swivelled at a folding jaw carrier (23), with two levers (6) being provided to take-up the said mass electrodes (11) and with a single lever (6) provided in between to take-up a welding electrode or spot welding electrode (11') or vice-versa.

9. Device according to claim 1, **characterized in that** joining tools and/or their take-up elements (8) can be swivelled independently of each other relative to the lever (6) and/or relative to the take-up elements (8).

10. Device according to claim 1 or claim 5, **characterized in that** the lever (6) can be swivelled linearly within a retainer (5), said retainer (5) being fastened with a take-up block (15) to the folding jaw carrier (23) in an arrangement that can be swivelled about the axis of rotation (16).

11. Device according to claim 1, **characterized in that** one or several lever(s) (6) jointly or independently of each other can be swivelled via actuation elements (17, 18) from a first into a second position and/or vice versa.

## Revendications

1. Dispositif destiné à la liaison sur le bord de tôles (3, 4), en particulier de tôles de carrosserie dans la construction automobile, dans une machine à plier (1) chargeable de préférence par le haut, comprenant au moins un lit de pliage (26) pour la réception d'au moins deux tôles (3,4), des mors de pliage (24,25) logés sur des porte-mors (23), le lit de pliage (26) et les mors de pliage (24,25) pouvant se déplacer l'un vers l'autre pour le pliage, ainsi qu'au moins un outil d'assemblage thermique abaissable sur la flasque de pliage (21) située dans la zone des mors de pliage (25), l'outil d'assemblage et/ou son élément de réception (8) étant situés à l'extrémité de levier (7) côté tôle d'un levier (6) fixé sur le porte-mors (23), **caractérisé par le fait que** l'outil d'assemblage et/ou son élément de réception (8) est pivotable dans au moins une direction de pivotement (9) définie autour du point d'assemblage des tôles à assembler (3,4).

2. Dispositif selon la revendication 1, **caractérisé en ce que** l'outil d'assemblage peut être déplacé relativement à l'élément de réception (8), avec un axe de pivotement (12), par pivotement et/ou de manière linéaire.

3. Dispositif selon la revendication 1 ou 2, **caractérisé en ce que** l'outil d'assemblage est pivotable par rapport au levier (6) en deux sens rectangulaires l'un relativement à l'autre.

4. Dispositif selon la revendication 1, **caractérisé en ce qu'**un trou oblong (13) est prévu dans la zone de l'extrémité du levier (7) dans lequel des éléments de guidage et de liaison (14, 14') se déplacent pour assurer le logement de l'élément de réception.

5. Dispositif selon la revendication 1, **caractérisé en ce que** le levier (6) est essentiellement situé dans le sens horizontal linéaire au porte-mors (23), qu'il peut être déplacé et qu'il est pivotable autour d'un axe de rotation (16).

6. Dispositif selon la revendication 1, **caractérisé en ce que** l'outil d'assemblage est constitué d'électrodes (11, 11') pour souder, d'un rayon laser ou d'un autre outil de soudage ou de brasage quelconque.

7. Dispositif selon la revendication 1, **caractérisé en ce qu'**au moins une électrode de soudage (11') et au moins une électrode de masse (11) sont ordonnées chacune de manière pivotable, en tant qu'outil d'assemblage pour soudage, sur un levier (6) et/ou un élément de réception (8).

8. Dispositif selon la revendication 7, **caractérisé en ce qu'**au moins trois leviers (6), avec une électrode chacun (11, 11'), sont ordonnés de manière pivotable, hors du lit de pliage (26), les uns à côté des autres sur un porte-mors (23), deux leviers (4) étant prévus pour la réception des électrodes de masse (11) et entre ces deux leviers un seul levier (6) pour la réception d'une électrode de soudage ou électrode de soudage par points (11') ou inversement.

9. Dispositif selon la revendication 1, **caractérisé en ce que** les outils d'assemblage et/ou leurs éléments de réception (8) peuvent être pivotés indépendamment les uns des autres relativement au levier (6) et aux éléments de réception (8).

10. Dispositif selon la revendication 1 ou 5, **caractérisé en ce que** le levier (6) est ordonné à l'intérieur d'un dispositif de maintien (5) où il se déplace linéairement, le dispositif de maintien (5) étant fixé sur un bloc de réception (15) sur le porte-mors (23) et étant pivotable autour d'un axe de rotation (16).

11. Dispositif selon la revendication 1, **caractérisé en ce qu'**un ou plusieurs leviers (6) est ou sont pivotables ensemble ou indépendamment les uns des autres via des éléments de commande (17, 18) pour passer d'une première position en une deuxième position ou inversement.
